# EUROPEAN PATENT APPLICATION

(11) **EP 2 599 567 A2**
(43) Date of publication of application: **05.06.2013**
(21) Application number: 11811879.3
(22) Date of filing: 29.07.2011
(51) Int. Cl.: B22F 9/24, B22F 1/00, B82B 3/00

(54) **METHOD FOR THE PREPARATION OF NANOPARTICLES IN IONIC LIQUIDS**

(30) Priority: 30.07.2010 ES 201031195
(71) Applicant: Universidade De Santiago De Compostela, 15782 Santiago de Compostela (ES)
(72) Inventor: ARCE ARCE, Alberto, E-15782 Santiago de Compostela (ES); SOTO CAMPOS, Ana, E-15782 Santiago de Compostela (ES); RODIL RODRIGUEZ, Eva, E-15782 Santiago de Compostela (ES); RODRIGUEZ CABO, Borja, E-15782 Santiago de Compostela (ES)
(74) Representative: Carvajal y Urquijo, Isabel
(86) International application number: PCT/ES2011/070561
(87) International publication number: WO 2012/013852

(57) **Abstract**

The invention relates to a method for the preparation of nanoparticles in ionic liquids. Specifically, the invention relates to a simple, quick and effective method for the preparation of dispersions of nanoparticles (nanofluids) in an ionic liquid.

## Description

### Field of the invention

The invention belongs to the nanotechnology field and refers to a general method for the preparation of metal oxides, sulfides or selenides, or metal nanoparticles in ionic liquids. Specifically, the method is carried out by a new fragmentation and later dispersion method inside an ionic liquid.

### Background of the art

A group of nanoparticles of interest in the industry are chalcogenide nanoparticles, mainly metallic as CdSe, CdS, CuS or MnS, due to the quantum confinement effects and photoemission characteristics depending of the particle size. These nanosemiconductors are applied to different areas of technology, including imaging and diagnostics in biology and medicine, emitting diodes, electroluminescent and photovoltaic devices, lasers, transistors, etc.

Another group of growing interest is metal oxides nanoparticles, as CdO, ZnO and Y₂O₃, which play an important role in many fields such as catalysis, energy storage, manufacturing of electroceramic and optoelectronic materials, etc.

The preparation of nanoparticles in liquid phase involves one or more chemical reactions in an aqueous or nonaqueous medium, where catalysts or stabilizers are usually added. In other cases, to enhance the reaction ultrasounds, ultraviolet radiation, high temperatures and / or pressure are used.

For example, in the Journal of the American Chemical Society, 2003, 125, 11100-11105, a process for preparing nanoparticles of metal sulfides (PbS, ZnS, CdS and MnS) by reaction of metal chloride with elemental sulfur at high temperatures (200 °C-320 °C) and in the presence of solvents is described.

On the other hand, chemical transformations for the synthesis of nanoparticles using ionic liquids as medium are well known. Ionic liquids are salts with low melting points, resulting from the charge relocation in at least one of its constituent ions, derived from factors such as asymmetry or size. Because of this, they show cation-anion attractive forces weaker than those found in conventional ionic salts, which causes them to be liquid over a wide range of temperatures, including room temperature in a large number of cases. Ionic liquids have advantageous properties such as low melting point, extremely low volatility, thermal and chemical stability, low flammability, high thermal and ionic conductivity, high heat capacity, etc. Therefore they are becoming materials with a large range of applications, including being ideal candidates to carry out the formation of nanoparticles.

An et al. (Materials Science and Engineering C, 2009, 29, 1984-1989) prepared Ag and Ag/polystyrene-coated nanoparticles by the reaction of silver nitrate with sodium citrate in 1-butyl-3-methylimidazolium tetrafluoroborate, BMIM BF4, in the presence of other solvents and in need to adjust the pH of the medium.

In WO2009/024312A2, a method of synthesis of metal nanoparticles is described, based in a reduction reaction with hydrogen in particular, using an autoclave and with an ionic liquid as reaction medium. Thus, this procedure is limited to the manufacture of metals which have an oxidation state of zero, it is not possible to prepare nanoparticles of metal oxides or metal sulfides, and moreover, the procedure uses organic solvents and high pressures are necessary.

U.S. Patent 7,547,347 B2 describes a method to produce a wide variety of nanoparticles, it is not limited to metals with an oxidation state of zero, and allows to prepare oxides, selenides, etc. The preparation of these nanoparticles is performed within an ionic liquid by the decomposition of a precursor or the formation of a complex. However, it is essential the use of a stabilizing agent ("capping agent") and high temperatures, above 200 °C, are necessary to isolate the nanoparticles formed from the ionic liquid.

Other procedures for carrying out the synthesis of nanoparticles are based on the precipitation of nanoparticles in a colloidal medium. In these procedures , it is necessary to prepare previously microemulsions wherein the precursors of the nanoparticles are. Then the microemulsions are put in contact, the precursors react and the nanoparticles precipitate in the medium. One limitation is that organic solvents are also required. Thus, for example metal oxides or sulfides were prepared by micellar procedures (Nanotechnology, 2005, 16, 1960; Science and Technology of Advanced Materials, 2005, 266-271) being necessary the use of surfactants, co-surfactants and solvents, etc.

In addition to the preparation of isolated nanoparticles is also of interest the preparation of nanofluids, ie, dispersions of nanoparticles within the fluid. Nanoparticles dispersions are characterized not only by the properties of the fluid, but for those that the solid gives to the mixture. The idea of enhancing the thermal, magnetic or electric properties of a fluid by the addition of nanoparticles, opens a wide field of applications such as liquid screens manufacturing, catalysis, thermal fluids (both for cooling and heating), to manufacture advanced damping systems or even bulletproof vests.

The preparation of these nanofluids is based on dispersing the nanoparticle, previously purchased or synthesized, within the ionic liquid. C. A. Nieto de Castro, et al. (J. Chem. Eng Data (2010), 55, 653-661) describe the preparation of nanofluids (nanoparticles dispersed in a fluid) in ionic liquids. Carbon nanotubes are dispersed in imidazolium and pirrolidinium ionic liquids. That is, it is performed a simple dispersion of an already nanoparticulated material, supplied commercially or previously synthesized and isolated, in an ionic liquid; these nanoparticles are not formed within it.

There are studies that indicate that the resulting nanofluid is much more stable if the nanoparticles are synthesized in the fluid than if it is simply dispersed in it. This stabilizing effect is achieved when the nanoparticles are prepared within the ionic liquid. In addition to stability, there are additional advantages in the preparation of nanoparticles within the ionic liquid, as controlling the size and minimizing the problems of agglomeration (Current Nanoscience (2009), 5, 103-112).

### Summary of the invention

The present invention provides a simple, fast and effective method to prepare dispersions of nanoparticles (nanofluids). The method of the invention is based on the fragmentation/dispersion of the solid precursor within an ionic liquid.

An advantage of the method of the invention is that it allows to prepare dispersions of nanoparticles in ionic liquids without additional components or reaction by-products. They are pure dispersions since they do not derive from a chemical reaction with the consequent production of unwanted by-products, it is not necessary to use stabilizing agents to disperse the nanoparticles in the ionic liquid, nor additional solvents.

One of the greatest contributions of the method of the present invention, as discussed above, lies in the possibility of preparing nanomaterials by fragmentation/dispersion without using organic solvents or other additional components such as stabilizers, surfactants, etc.

Although the invention is not limited to, the proposed mechanism for the formation of nanoparticles is based on the fragmentation/dispersion of the solid precursor. The reached temperature during the formation would lead to a thermolytic process, which in combination with the stirring of the mixture and the multiple points of coordination between the alkyl chains of ionic liquid and the solid surface would imply a fragmentation of the material at the nanoscale. The nanoparticles would be formed within the ionic liquid, being dispersed in the medium.

In view of the state of the art, this method is a great advance for the industrial development of nanoparticles dispersions due to its simplicity compared with other procedures where it is unavoidable to use additional components. For example, in the processes of reaction or decomposition of the precursor in order to form nanoparticles, a stabilizing agent is necessary because of the proposed mechanism for the process as described in U.S. 7,547,347 B2 (column 7).

An additional advantage is that the nanoparticles formed within the ionic liquid are more stable than those prepared by simple dispersion of isolated nanoparticulate material. This is because ionic liquids act as stabilizers of the nanoparticles formed, since their structural properties can form a kind of matrix wherein the nanoparticles are retained and stabilized (Angew. Chem. Int. Ed., 2004, (43), 4988-4992).

Another advantage is the possibility of preparing such nanoparticles without using volatile organic solvents. An additional advantage is that ionic liquids are not volatile due to their negligible vapor pressure, preventing environmental pollution.

The present invention provides a further step to isolate the nanoparticles, with the additional advantage of reusing the ionic liquid, which is a more economical and more environmentally friendly process.

For these reasons, the invention provides a suitable method for the preparation of dispersions of nanoparticles at an industrial scale.

Thus, an aspect of the invention refers to a method for the preparation of a dispersion of nanoparticles in ionic liquids comprising
a) contacting a solid precursor with an ionic liquid,
b) stirring the mixture between 50 and 150° C,
c) centrifugation and decantation.

This method is characterized by the absence of a stabilizing agent, the absence of a volatile solvent and the absence of surfactants or co-surfactants.

In a particular embodiment, the method comprises an additional step d), following step c), comprising the precipitation of the nanoparticles to obtain isolated nanoparticles.

In a more particular embodiment, the precipitation step d), comprises
i) adding a capping agent,
ii) adding a solvent,
iii) centrifugation and decantation.

A further aspect of the invention refers to a method for the preparation of a dispersion of nanoparticles in ionic liquids consisting of
a) contacting a solid precursor with an ionic liquid,
b) stirring the mixture between 50 and 150° C,
c) centrifugation and decantation.

A further aspect of the invention refers to a dispersion of nanoparticles in an ionic liquid obtainable by the method previously described. These dispersions of nanoparticles are characterized by their stability, the nanoparticles are more stable, and the obtained dispersions are pure, the dispersions do not comprise stabilizing agents nor additives.

### Description of the drawings

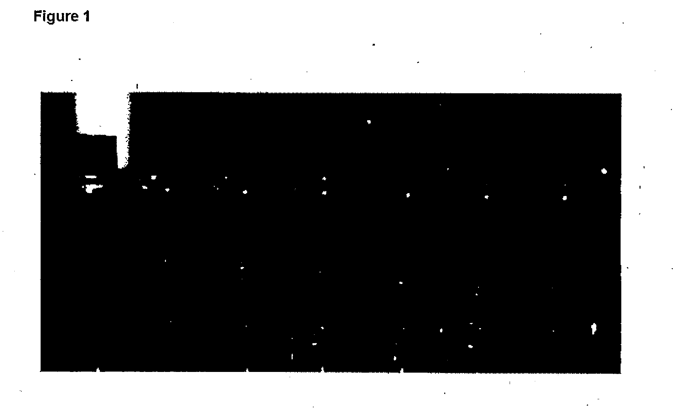

**Figure 1****.** Dispersions of nanoparticles in ionic liquids. From left to right, the shown dispersions are:
   - Hematite (Fe₂O₃) nanoparticles in P_{6,6,6,14}Cl, with the characteristic red colour of the solid.
   - Brown dispersion of CdO nanoparticles in P_{6,6,6,14}Cl.
   - Yellow-whitish dispersion of ZnS nanoparticles in P_{6,6,6,14}Cl.
   - CdS nanoparticles in P_{6,6,6,14}Cl, yellow coloured dispersion.
   - PbS nanoparticles in P_{6,6,6,14}NTf₂ with the typical blackish colour of the solid.
   - Dispersion of MnS nanoparticles in P_{6,6,6,14}NTf₂, greenish-coloured.
   - White dispersion of TiO₂ nanoparticles in P_{6,6,6,14}Cl.
**Figure 2****.** Precipitated CdS nanoparticles (left), and corresponding X-ray diffractogram (right). A micrograph made in the transmission electron microscope with the measurement of some of the nanoparticles and the X-ray diffractogram showing a hexagonal structure are shown.
**Figure 3****.** Micrographs of ZnS nanoparticles (top), and their X-ray diffractogram (below). The micrographs, taken in the transmission electron microscope, show precipitated nanoparticles in different regions and with different degrees of magnification. The obtained structure is face-centered cubic.
**Figure 4****.** Micrograph of PbS nanoparticles (left), made in the TEM, and X-ray diffractogram (right).
**Figure 5****.** Precipitated MnS nanoparticles (top), and their X-ray diffractogram (bottom). The micrographs were made at different degrees of magnification in a transmission electron microscope. X-ray diffraction confirmed the cubic structure of manganese sulfide.
**Figure 6****.** CdO nanoparticles (top) and X-ray diffractogram (bottom). The micrographs were made in different regions of the grid at different magnifications in a transmission electron microscope. The diffractogram confirms the cubic structure of cadmium oxide.
**Figure 7****.** Micrograph of the as prepared TiO₂ nanoparticles (left) and their Raman spectrum (right). The micrographs were made in the transmission electron microscope. Raman spectroscopy confirms the composition of the nanoparticles.
**Figure 8****.** Micrographs of Fe₂O₃ nanoparticles in P_{6,6,6,14}Cl (top) and X-ray diffractogram (bottom). The micrographs were performed in a transmission electron microscope.
**Figure 9****.** Micrographs of the TiO₂ nanoparticles fabricated in 1-hexyl-3,5-dimethylpyridinium bis(trifluoromethylsulfonyl)imide. They were made in a transmission electron microscope.
**Figure 10****.** Micrographs of the TiO₂ nanoparticles fabricated in loctyl-3-methylimidazolium bis(trifluoromethylsulfonyl)imide. They were made in a transmission electron microscope.
**Figure 11****.** Micrographs of the AgI nanoparticles in trihexyl(tetradecyl)phosphonium chloride. They were made in a transmission electron microscope.
**Figure 12****.** Micrographs of the CdS nanoparticles in P_{6,6,6,14}NTf₂. They were made in a transmission electron microscope.

### Detailed description of the invention

The dispersions of nanoparticles prepared in the present invention are stable dispersions with spherical not agglomerated nanoparticles with an average size between 1 and 100 nm, more preferably between 1 and 30 nm, even more preferably between 3 and 10 nm. In a particular embodiment, the nanoparticles of interest for the present invention are selected from the group consisting of metals, metal oxides, metal halides, metal sulfides and metal selenides. In a particular embodiment, they are selected from metal oxides, metal halides, metal sulfides and metal selenides. In a particular embodiment, the metal components are selected from transition metals. In a particular embodiment, the metals are selected from the group consisting of cadmium, zinc, lead, manganese, silver, titanium and iron. In a preferred embodiment metal oxides, halides or sulfides are selected from the group consisting of cadmium sulfide, zinc sulfide, lead sulfide, manganese sulfide, silver iodide, cadmium oxide, titanium oxide and iron (III) oxide.

In the present invention "solid precursor" refers to a material in solid state with an average particle size greater than 999 nm. This solid precursor may have different states of aggregation, for example, powder, flakes, cylinders, wires, etc. In a particular embodiment, the solid precursor is selected from the group consisting of metals, metal oxides, metal halides, metal sulfides and metal selenides. In a particular embodiment is selected from metal oxides, metal halides, metal sulfides and metal selenides. In a particular embodiment, the metal components are selected from transition metals. In a particular embodiment, the metals were selected from the group consisting of cadmium, zinc, lead, manganese, silver, titanium and iron. In a preferred embodiment metal oxides or sulfides were selected from the group consisting of cadmium sulfide, zinc sulfide, lead sulfide, manganese sulfide, silver iodide, cadmium oxide, titanium oxide and iron (III) oxide.

In the present invention the term "nanoparticle dispersion" refers to a fluid wherein uniformly suspended nanoparticles are contained. This is due to the structural properties of ionic liquids that form a matrix in which nanoparticles are retained in a stable way. In the present invention the term "ionic liquid" refers to a fluid consisting of a cation and an anion characterized by having a melting point same or below 150 °C, more preferably below 100 °C, more preferably between 25 °C and 50 °C, even more preferred are those with a melting point of 25 °C, commonly known as "room temperature ionic liquids. " The cation consists of a cationic atom ofN, P or S attached to alkyl chains or forming part of an aromatic ring, for example, tetraalkylammonium, tetraalkylphosphonium, tetraalkylsulfonium, guanidinium, a heterocyclic aromatic cation, etc. Each alkyl chains attached to N, P or S may be identical or different. The anion is selected from a halide or a polyatomic specie with delocalized charge, eg chloride, bromide, iodide, sulfate, alkyl, sulfonate, alkyl nitrate, thiocyanate, phosphate, alkylphosphate, dialkyl phosphate, phosphonate, alkylphosphonate, dialkyl phosphonate, carboxylate, carbonate, hexafluorophosphate, hexafluoroarseniate, hexafluoroantimoniate, tetrafluoroborate, trifluoroacetate, trifluoroalkylsulfonato, p-toluenesulfonate, bis(trifluoroalkylsulfonyl)imide, etc.

In the present invention, the term "heterocyclic aromatic cation" refers to an aromatic ring from 3 to 15 members and from 1 to 3 nitrogen atoms, preferably a ring of 4 to 8 members comprising one or more nitrogen atoms, and more preferably a ring of 5 to 6 members with one or more nitrogen atoms, wherein the quaternized nitrogen atom is attached to an alkyl chain. The aromatic ring can be substituted or unsubstituted by one or more alkyl group. For purposes of this invention, systems can be monocyclic, bicyclic or tricyclic, that can include fused rings, for example pyridinium pyramidinium, imidazolium, oxazolium, 1,2,3-triazolium, pyrrolidinium, piperidinium, quinolinium, isoquinolinium, thiazolium, etc.

In the present invention, the term "alkyl" refers to a linear or branched hydrocarbon chain, cyclic or acyclic consisting of carbon and hydrogen atoms, containing no unsaturations, having 1 to 24, preferably 1 to 18, more preferably from 1 to 14 carbon atoms, optionally substituted by one or more substituents selected from the group consisting of a halogen atom, a hydroxy group, a carboxy group, an alkoxy group, a cyano group, a nitro group, a CF₃ group or tioalcoxy group, for example, methyl, ethyl, n-propyl, i-propyl, n-butyl, t-butyl, n-pentyl, cyclopropyl, n-hexyl, n-tetradecyl, etc.

In a particular embodiment, ionic liquids of this invention are selected from those in which at least one alkyl chain attached to N or P is 6 to 14 carbon atoms.

These ionic liquids with an alkyl chain of 6 to 14 carbon atoms are of particular interest to the invention because these long chains have many points of contact with solid, facilitating their dispersion.

The percentage of nanoparticles that can be dispersed on a fluid has a limit that depends on the nature of both materials, operating conditions (agitation and temperature), on the characteristics of their morphology and on their sizes.

In a particular embodiment, the ionic liquid is selected from the group consisting of trihexyl(tetradecyl)phosphonium chloride, trihexyl(tetradecyl)phosphonium bis(trifluoromethylsulfonyl)imide and 1-hexyl-3,5-dimethylpiridinium bis(trifluoromethylsulfonyl)imide.

In a particular embodiment, in step b) the mixture is stirred between 50 °C and 150 °C. More preferably between 115 and 130 °C, even more preferably at 120 °C.

In a particular embodiment, in step b) the mixture is stirred between 2 and 6 hours. Preferably, it is stirred between 3 and 5 hours.

The invention has the additional advantage of using a range of temperatures lower than those commonly used in literature consisting of a chemical transformation or degradation of the precursor. This temperature range facilitates the scaling-up of the process and makes significantly lower the cost at an industrial scale.

In another particular embodiment, in the step b) the mixture is stirred between 700 and 1300 rpm.

In a particular embodiment, in the step c) the mixture is centrifuged between 3500 and 4500 rpm. In a more preferred embodiment, the centrifugation during the step c) is carried out between 10 and 20 minutes. During the step c), the solid precursor added in excess in step a) and that continues as such, is separated from the dispersion by settling down.

The term "capping agent" refers to a compound intended to protect the surface of materials, in particular nanoparticles, avoiding agglomeration, degradation and preserving the properties of the material. In a particular embodiment, the capping agent is selected from the group consisting of compounds which are bearing a thiol group, an amine group, phosphine or phosphine oxide. Preferably, the capping agent is thiophenol or dodecanethiol.

In a particular embodiment the solvent added in step ii) is selected from an alkyl alcohol and a dialkyl ketone. In a preferred embodiment, the solvent is methanol, ethanol, isopropanol, acetone or isobutylmethylketone. Preferably, ethanol or acetone.

In a particular embodiment, in step iii) the mixture is centrifuged between 4000 and 5000 rpm from 10 to 20 minutes.

In step iii) the nanoparticles are separated by decantation.

The following examples illustrate the invention and they should not be interpreted as a limitation.

### EXAMPLES

### Characterization of the nanoparticles.

UV-visible spectra were obtained with a simple beam Agilent 8453 spectrophotometer, with a range of wavelengths (λ) from 190 to 1100 nm and accuracy lower than ± 0.5 nm. For the samples quartz cells of 1.5 mL volume of Agilent were used Technologies. To study the UV-visible absorption, dilutions in toluene of the dispersed nanoparticles are prepared. The sample is introduced into a quartz cell of 1.5 ml and the wavelengths are scanned from 200 to 800 nm to locate the peak absorption for each type of nanoparticles.

Luminescence tests were carried out in a Jobin Yvon Horiba spectrofluorimeter (model FluoroMax-3), using the same type of cells than in UV-visible. Fluorescence tests were performed just as UV-visible absorption, testing at different wavelengths (λ) of excitation.

The obtaining of histograms of size distribution and Zeta potential (ξ) curves for the stability study was achieved with a Zetasizer Nano ZS analyzer from Malvern, model ZEN3600 with laser at 633 nm. For the size measurements a glass cuvette from Malvern, model PCS1115, was used and for the zeta potential studies it was also used a "Dip Cell" device, also of Malvern, ZEN1002 model. For this purpose dilutions in toluene of the dispersion of nanoparticles were prepared and placed in the cuvette with the "Dip cell" device.

The ICP-MS studies were carried out in a VARIAN 820-MS mass spectrometer quadrupole type with a DDEM detector. For this purpose dilutions in water and ethanol of the dispersion of nanoparticles were used.

Raman spectroscopy was performed in a RENISHAW Raman Reflex Invia confocal spectrometer with Argon laser at 514 nm. To this end, dilutions in toluene or ethanol of the dispersion of nanoparticles were prepared.

The transmission electron microscopy (TEM) used was a Philips CM-12, with accelerating voltages from 20 to 120 kV and allowing observations to 730000x. It has a resolution of 0.2 nm among lines and 0.3 nm among points. The photographs were made with a MEGA VIEW-II DOCU camera. The program used for the treatment of the photographs was AnalySIS from Soft Imaging System. The observation of the precipitated nanoparticles was carried out on copper grids covered with Formvar/carbon.

The characterization by X-ray diffraction of the precipitated nanoparticles was performed on a Siemens powder diffractometer with copper anode.

### Example 1. Preparation of a dispersion of nanoparticles in an ionic liquid.

General procedure. Approximately 0.05 g of the corresponding metal, metal oxide, metal halide, metal sulfide or metal selenide and about 5 g of ionic liquid are stirred between 700 and 1300 rpm at a temperature between 70 and 150 °C for approximately 2 to 6 hours. The mixture is cooled to 25 °C, centrifuged at 3500 rpm from 10 to 20 minutes and decanted. The nanoparticles dispersed within the ionic liquid (Figure 1) are characterized by the above described methods.

**Example 1.1.** According to the general procedure of Example 1 a yellowish dispersion of nanoparticles of cadmium sulfide, natural color of the formed nanoparticles [P. J. G. Coutinho et al., Annals of the New York Academy of Sciences, 1130, 2008, 242-246],was prepared in trihexyl(tetradecyl)phosphonium chloride starting from 0.05 g of cadmium sulfide and 5 g of trihexyl(tetradecyl)phosphonium chloride by agitation (1200 rpm) at 120 °C for 4 hours. As shown in Table 1 the absorption peak of the diluted dispersion in toluene obtained by UV-visible absorption spectroscopy appears at a wavelength of 430 nm. Any peak at 515 nm, characteristic of cadmium sulfide-size [S. P. Nair et al., Journal of Materials Chemistry, 12, 2722-2725, 2003], was observed. Its fluorescence spectrum has a peak emission at 450 nm (Table 1), indicating the fluorescence of the nanoparticles. The value of zeta potential, which is presented in Table 1 and that was measured in the Zetasizer, was -33.7 mV, showing that the dispersion is stable.

As shown in Table 2, the average size of nanoparticles is 6.1 nm with a minimum size of 4 nm and a maximum size of 10 nm; the size distribution of nanoparticles is 6.1 ± 1.3 nm (± standard deviation) determined by dynamic light scattering (Zetasizer Nano ZS).

**Example 1.2.** According to the general procedure of Example 1, a whitish-yellowish dispersion of nanoparticles of zinc sulfide (ZnS) in trihexyl(tetradecyl)phosphonium chloride, characteristic colour of the prepared nanoparticles [M. Dhanam et al. chalcogenide Letters, 6, 12, 2009, 713-722] was prepared starting from 0.05 g of zinc sulfide and 5 g trihexyl(tetradecyl)phosphonium chloride by agitating (1200 rpm) at 120 °C for 4 hours. A toluene dilution of the dispersion of ZnS nanoparticles prepared in ionic liquid was analyzed by UV-visible absorption spectroscopy, resulting in an absorption peak at 310 nm (Table 1), typical of its nanometric size [J. H. Yu et al., Journal of the American Chemical Society, 127, 5662-5670, 2005]. We confirmed the fluorescence of the nanoparticles by studying their fluorescence emission, showing the fluorescence spectrum a maximum emission peak at 450 nm, as shown in Table 1, where the value of zeta potential is also showed, -33, 5 mV, indicating that the dispersion is stable.

Table 2 shows the average size of nanoparticles, which turned out to be 6.5 nm with a minimum size of 5 nm and a maximum size of 8 nm; the size distribution of nanoparticles, determined by dynamic light scattering, is 6.5 ± 0, 9 nm (± standard deviation).

**Example 1.3.** According to the general procedure of Example 1 a black colour dispersion of lead sulfide (PbS) nanoparticles, characteristic colour of the PbS nanoparticles [M. S. Dhlamini et al., South African Journal of Science, 104, 2008, 398-400] was prepared in trihexyl(tetradecyl)phosphonium bis(trifluoromethylsulfonyl)imide, from 0.05 g of lead sulfide and 5 g of trihexyl(tetradecyl)phosphonium bis(trifluoromethylsulfonyl)imide by agitation (1200 rpm) at 120 °C for 4 hours. Table 1 shows the absorption peak of the diluted dispersion in toluene obtained by UV-visible absorption spectroscopy, with a maximum absorption at a wavelength of 285 nm, typical of nanoscaled lead sulfide [M. Behboudnia et al., Bulletin of the Korean Chemical Society, 29, 1, pg. 53-56, 2008]. Its fluorescence spectrum has an emission peak at 415 nm (Table 1), indicating the fluorescence of the nanoparticles. The value of zeta potential, which is presented in Table 1 and that was measured in the Zetasizer was 36.4 mV indicating that the dispersion is stable.

As shown in Table 2, the average size of nanoparticles is 8.9 nm with a minimum size of 6 nm and a maximum size of 15 nm; the size distribution of nanoparticles, determined by dynamic light scattering, is 8.9 ± 1.9 nm (± standard deviation).

**Example 1.4.** According to the general procedure of Example 1 a greenish dispersion of manganese sulfide nanoparticles, natural colour of the prepared nanoparticles [A. Puglisi et al., Chemistry of Materials, 22, 9, 2010, 2804-2813] in trihexyl(tetradecyl)phosphonium bis(trifluoromethylsulfonyl)imide was prepared, starting from 0.05 g of manganese sulfide and 5 g of trihexyl(tetradecyl)phosphonium bis(trifluoromethylsulfonyl)imide by agitation (1200 rpm) at 120 °C for 4 hours. As it is shown in Table 1, the absorption peak of diluted dispersion in toluene obtained by UV-visible absorption spectroscopy appears at a wavelength of 283 nm. Any peak at 388 nm, characteristic wavelength of bulk manganese sulfide [Y.-W. June et al., Journal of the American Chemical Society, 124, 4, pg. 615-618, 2002] appeared. Its fluorescence spectrum has an emission peak at 400 nm (Table 1), indicating the fluorescence of the nanoparticles.

Table 2 shows the average size of nanoparticles was 4.3 nm with a minimum size of 3 nm and a maximum size of 6 nm; the size distribution of nanoparticles determined by dynamic light scattering is 4.3 ± 0, 6 nm (± standard deviation).

**Example 1.5.** According to the general procedure of Example 1, a brown dispersion of cadmium oxide (CdO) nanoparticles, natural colour of the prepared nanoparticles [K. Manickasthai et al., Indian Journal of Pure and Applied Physics, 46, 2008, 561-564] in trihexyl(tetradecyl)phosphonium chloride was prepared from 0.05 g of cadmium oxide and 5 g of trihexyl(tetradecyl)phosphonium chloride by agitation (1200 rpm) at 120 °C for 4 hours. A dilution in toluene of the dispersion of CdO nanoparticles prepared in the ionic liquid was analyzed by UV-visible absorption spectroscopy, resulting in an absorption peak at 350 nm (Table 1), typical of nanometric size [S. Reddy et al., Journal of International Electrochemical Science, 5, 10-17, 2010]. We confirmed the composition of nanoparticles by Raman spectroscopy tests. Table 1 shows the zeta potential value, which was -46.0 mV, indicating that the dispersion is stable.

As shown in Table 2 the average size of nanoparticles is 6.2 nm with a minimum size of 4 nm and a maximum size of 11 nm; the size distribution of nanoparticles, determined by dynamic light scattering, is 6.2 ± 1.4 nm (± standard deviation).

**Example 1.6.** According to the general procedure of Example 1, a white dispersion of titanium dioxide (TiO2) nnaoparticles in trihexyl(tetradecyl)phosphonium chloride, characteristic colour of the prepared nanoparticles [C.-I. Wu et al., Materials Letters, 62, 2008, 1923-1926] was prepared from 0.05 g of titanium dioxide and 5 g of trihexyl(tetradecyl)phosphonium chloride by agitation (1200 rpm) to 120 °C for 4 hours. Table 1 shows the absorption peak of the dispersion diluted in toluene obtained by UV-visible absorption spectroscopy, with a maximum absorption at a wavelength of 350 nm, typical of nanosized titanium dioxide [S. Nad et al., Journal of Colloid and Interface Science, 262, 89-94, 2003]. The value of zeta potential, which is presented in Table 1 and that was measured in the Zetasizer, was -36.0 mV, indicating that the dispersion is stable. The size distribution of nanoparticles is presented in Table 2. The composition of the nanoparticles was confirmed by Raman spectroscopy.

**Example 1.7.** According to the general procedure of Example 1, a redish dispersion of iron (III) oxide (Fe2O3) nanoparticles, natural colour of the fabricated nanoparticles [L. Wang et al., Journal of the American Chemical Society, 91, 10, 2008, 3391-3395] was prepared in trihexyl(tetradecyl)phosphonium chloride, from 0.05 g of iron oxide and 5 g of trihexyl(tetradecyl)phosphonium chloride by agitating (1200 rpm ) at 120 °C for 4 hours. Table 1 shows the absorption peak of the diluted dispersion in toluene obtained by UV-visible absorption spectroscopy, with maximum absorption at a wavelength of 390 nm, typical of nanoscaled iron oxide [J. Lian et al. ACSNano, 3, 11, 3749-3761, 2009]. We confirmed the composition of nanoparticles by Raman spectroscopy tests. The value of zeta potential, which is presented in Table 1 and that was measured in the Zetasizer, was -44.7 mV, which indicates that the dispersion is stable.

As shown in Table 2, the average size of nanoparticles is 45.5 nm with a minimum size of 36 nm and a maximum size of 54 nm; the size distribution of nanoparticles determined by dynamic light scattering is 45.5 ± 5.1 nm (± standard deviation).

**Example 1.8.** According to the general procedure of Example 1, a white dispersion of of titanium dioxide (TiO2) nanoparticles in 1-hexyl-3,5-dimethylpyridinium bis(trifluoromethylsulfonyl)imide, characteristic colour of the prepared nanoparticles [C.-I. Wu et al., Materials Letters, 62, 2008, 1923-1926] was achieved starting from 0.05 g of titanium dioxide and 5 g of 1-hexyl-3,5-dimethylpyridinium bis(trifluoromethylsulfonyl)imide by agitation (1200 rpm) at 120 °C for 4 hours. The ionic liquid was synthesized by the method described in A. Arce et al. (The Journal of Chemical Thermodynamics, 42, 6, 2010, 712-718). A dilution in toluene of the dispersion of TiO₂ nanoparticles in ionic liquid was prepared and analyzed by UV-visible absorption spectroscopy, resulting in an absorption peak at 350 nm (Table 1), typical of nanometric size [S. Nad et al., Journal of Colloid and Interface Science, 262, 89-94, 2003].

**Example 1.9.** According to the general procedure of Example 1, a white dispersion of of titanium dioxide (TiO2) nanoparticles in 1-octyl-3-methylimidazolium bis(trifluoromethylsulfonyl)imide, characteristic colour of the prepared nanoparticles [C.-I. Wu et al., Materials Letters, 62, 2008, 1923-1926] was achieved starting from 0.05 g of titanium dioxide and 5 g of 1-octyl-3-methylimidazolium bis(trifluoromethylsulfonyl)imide by agitation (1200 rpm) at 120 °C for 4 hours.

**Example 1.10.** According to the general procedure of Example 1, a yellowish dispersion of silver iodide (AgI) nanoparticles in trihexyl(tetradecyl)phosphomium chloride, characteristic colour of the prepared nanoparticles [S. Tamura et al., Journal of Electroanalytical Chemistry, 559, 2003, 103-109] was achieved starting from 0.05 g of silver iodide and 5 g of trihexyl(tetradecyl)phosphomium chloride by agitation (1200 rpm) at 120 °C for 4 hours.

**Example 1.11.** According to the general procedure of Example 1, a yellowish dispersion of cadmium sulfide nanoparticles in trihexyl(tetradecyl)phosphomium bis(trifluoromethylsulfonyl)imide, characteristic colour of the prepared nanoparticles [[P. J. G. Coutinho et al., Annals of the New York Academy of Sciences, 1130, 2008, 242-246] was achieved starting from 0.05 g of cadmium sulfide and 5 g of trihexyl(tetradecyl)phosphomium bis(trifluoromethylsulfonyl)imide by agitation (1200 rpm) at 120 °C for 4 hours.

**Table 1**

| **Nanoparticles** | **Ionic Liquid** | **UV-visible λmax. (nm)** | **Fluorescence λmax. (nm)** | **Stability ξ (mV)** |
|---|---|---|---|---|
| CdS | P_{6,6,6,14}Cl | 430 | 450 | -33,7 |
| ZnS | P_{6,6,6,14}Cl | 310 | 450 | -33,5 |
| PbS | P_{6,6,6,14}NTf₂ | 285 | 415 | 36,4 |
| MnS | P_{6,6,6,14}NTf₂ | 283 | 400 | - |
| CdO | P_{6,6,6,14}Cl | 350 | - | -46,0 |
| TiO₂ | P_{6,6,6,14}Cl | 350 | - | -36,0 |
| Fe₂O₃ | P_{6,6,6,14}Cl | 390 | - | -44,7 |
| TiO₂ | HMMPyNTf₂ | 350 | - | - |

**Table 2**

| | | | **Particle size (nm)** | | |
|---|---|---|---|---|---|
| **Nanoparticles** | **Ionic Liquid** | **Minimum** | **Maximum** | **Average** | **Std. Dev.** |
| CdS | P_{6,6,6,14}Cl | 4 | 10 | 6,1 | 1,3 |
| ZnS | P_{6,6,6,14}Cl | 5 | 8 | 6,5 | 0,9 |
| PbS | P_{6,6,6,14}NTf₂ | 6 | 15 | 8,9 | 1,9 |
| MnS | P_{6,6,6,14}NTf₂ | 3 | 6 | 4,3 | 0,6 |
| CdO | P_{6,6,6,14}Cl | 4 | 11 | 6,2 | 1,4 |
| TiO₂ | P_{6,6,6,14}Cl | 9 | 15 | 11,5 | 1,8 |
| Fe₂O₃ | P_{6,6,6,14}Cl | 36 | 54 | 45,5 | 5,1 |

### Example 2. Precipitation of nanoparticles.

General procedure. Dodecanethiol is added to the nanodispersion (50 µL/mL), and then it is diluted in ethanol 1/10. The mixture is centrifuged about 20 minutes at 4000 rpm and decanted. Optionally, the solid obtained is dried. Drying is carried out under vacuum (0.2-0.3 bar absolute pressure) and room temperature.

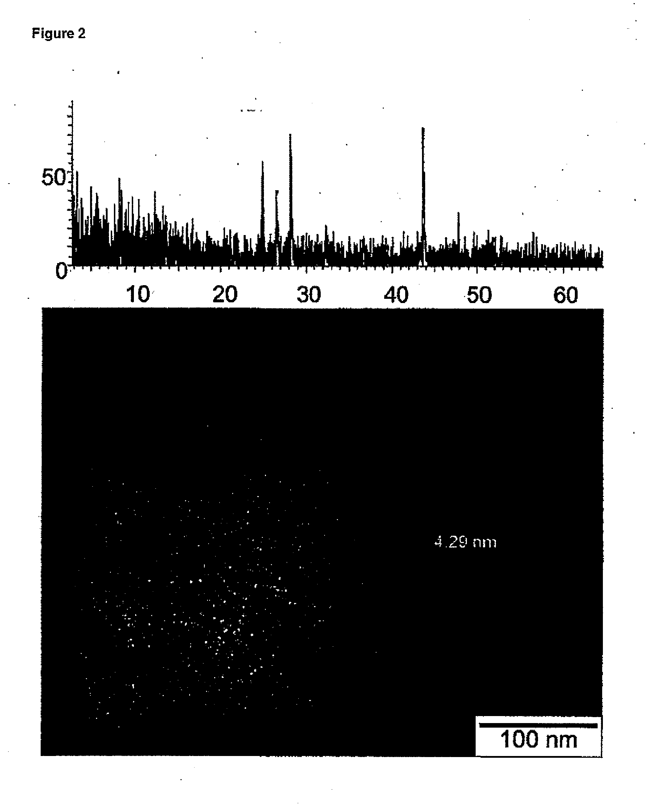

**Example 2.1.** According to the general procedure of Example 2, the cadmium sulfide nanoparticles were precipitated from the dispersion of cadmium sulfide in trihexyl(tetradecyl)phosphonium chloride. Figure 2 shows a micrograph of the precipitated nanoparticles which was performed in a transmission electron microscope, with varying degrees of magnification. The nanoparticles are spherical, they do not present agglomeration phenomena and have a uniform size distribution. In the micrographs, the size of the nanoparticles was measured thanks to the computer application of the microscope, obtaining a nanoparticle size between 3 and 7 nm (Figure 2). X-ray diffraction pattern confirms the hexagonal structure of the cadmium sulphide nanoparticles, as shown in Figure 2.

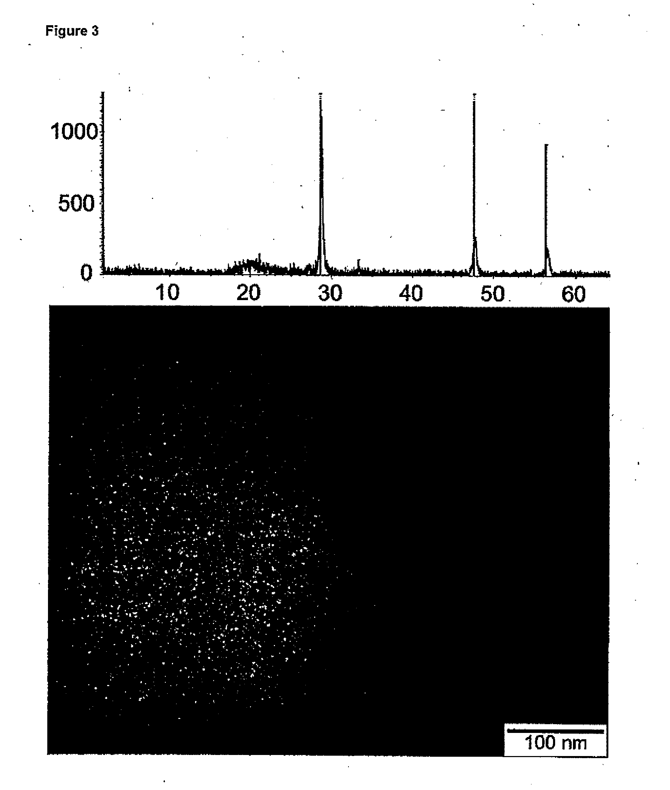

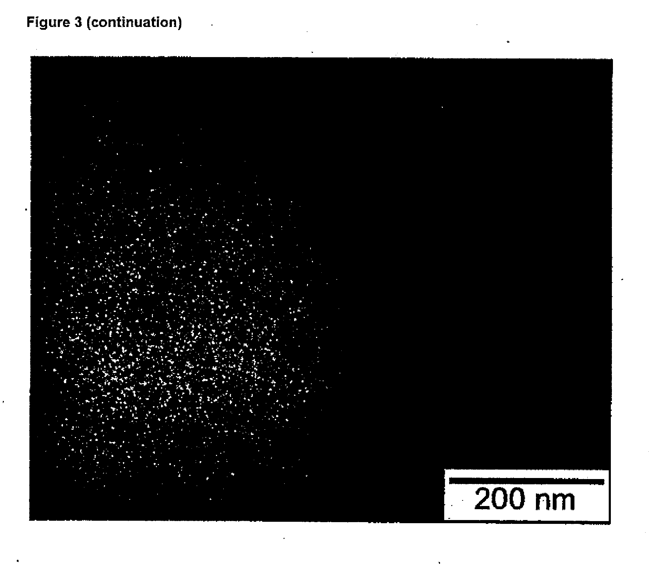

**Example 2.2.** According to the general procedure of Example 2, the zinc sulfide nanoparticles were precipitated from the dispersion of zinc sulfide in trihexyl(tetradecyl)phosphonium chloride. Different micrographs of the precipitated nanoparticles were recorded in a transmission electron microscope, with varying degrees of magnification. As shown in Figure 3, the nanoparticles are spherical, non-agglomerated and with a homogeneous size distribution. The nanoparticle size is between 4 and 8 nm, value obtained from the micrographs using the computer application of the microscope. It was confirmed the centered in the faces cubic structure of the precipitated nanoparticles by X-ray diffraction, as it is shown in the diffractogram in Figure 3.

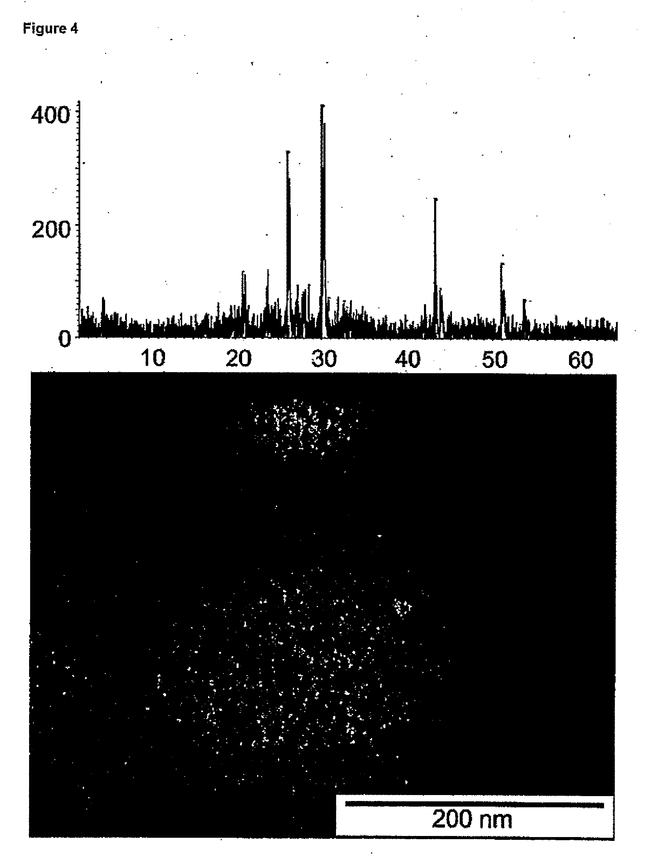

**Example 2.3.** According to the general procedure of Example 2, lead sulfide nanoparticles were precipitated from the dispersion of lead sulfide in trihexyl(tetradecyl)phosphonium bis(trifluoromethylsulfonyl)imide. The presented micrograph of the as-precipitated nanoparticles (Figure 4) was performed in a transmission electron microscope, with varying degrees of magnification. The nanoparticles are spherical, have no agglomeration phenomena and have a uniform size distribution. The computer application of the microscope measured the size of the nanoparticles in the micrographs, yielding a nanoparticle size between 3 and 6 nm (Figure 4). X-ray diffraction confirms the octahedral structure of lead sulfide nanoparticles, as shown in Figure 4.

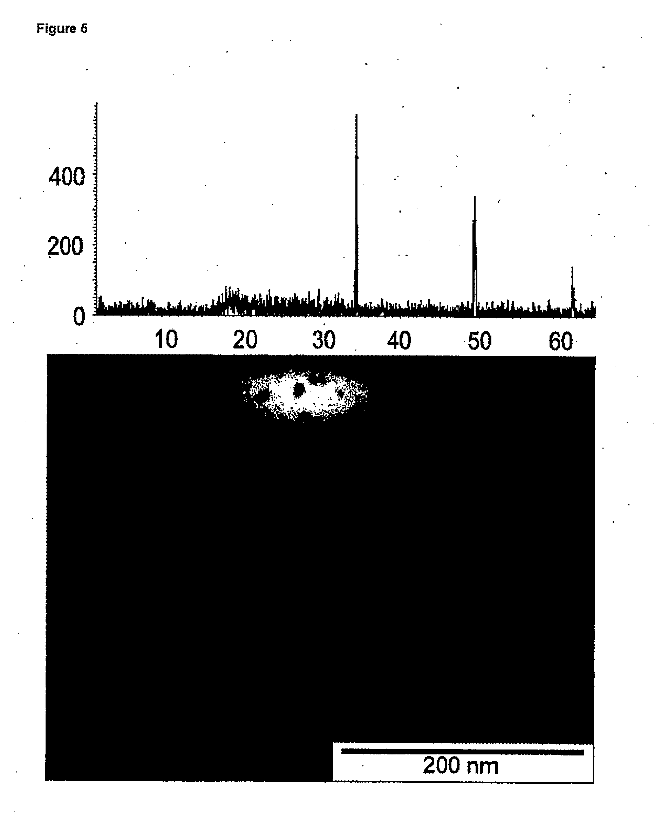

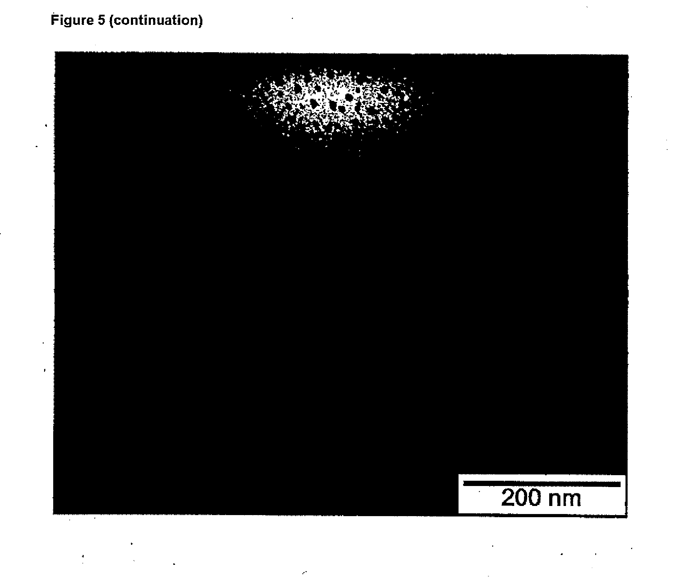

**Example 2.4.** According to the general procedure of Example 2, the manganese sulfide nanoparticles were precipitated from the dispersion of manganese sulfide in trihexyl(tetradecyl)phosphonium bis(trifluoromethylsulfonyl)imide. Several micrographs of the precipitated nanoparticles were recorded in a transmission electron microscope, with different degrees of magnification. Spherical nanoparticles are observed, not in clusters and with a uniform size distribution. In the micrographs, it was also measured the size of the nanoparticles with the help of the computer application of the microscope, obtaining a nanoparticle size between 3 and 10 nm (Figure 5). It was confirmed the cubic structure of the precipitated nanoparticles by X- ray diffraction analysis, as shown in the diffractogram in Figure 5.

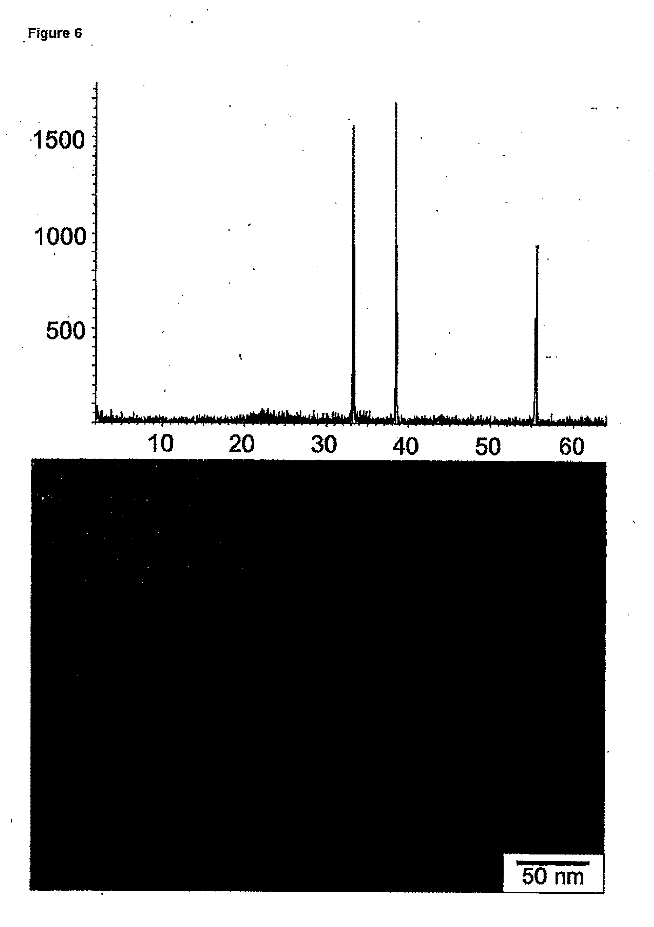

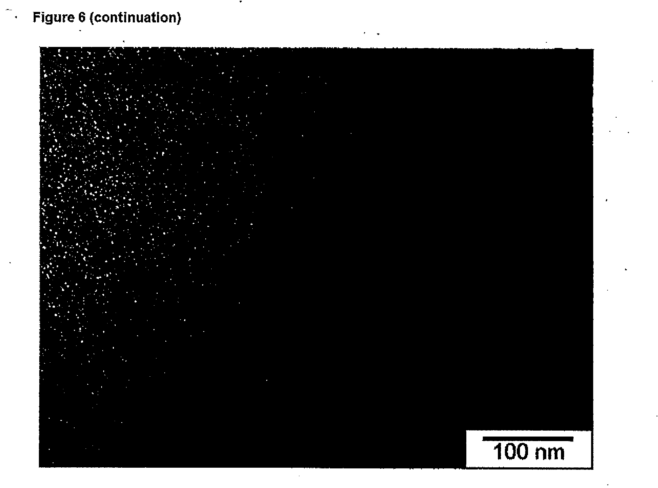

**Example 2.5.** According to the general procedure of Example 2, the cadmium oxide nanoparticles were precipitated from the cadmium oxide dispersion in trihexyl(tetradecyl)phosphonium chloride. The presented micrographs of the precipitated nanoparticles (Figure 6) were performed in a transmission electron microscope, with varying degrees of magnification. The nanoparticles are spherical, have no agglomeration phenomena and have a uniform size distribution. The size of the nanoparticles is between 4 and 5 nm, value obtained from the micrographs using the computer application of the microscope (Figure 6). X-ray diffraction confirmed the cubic structure of the cadmium oxide precipitated nanoparticles, as shown in Figure 6.

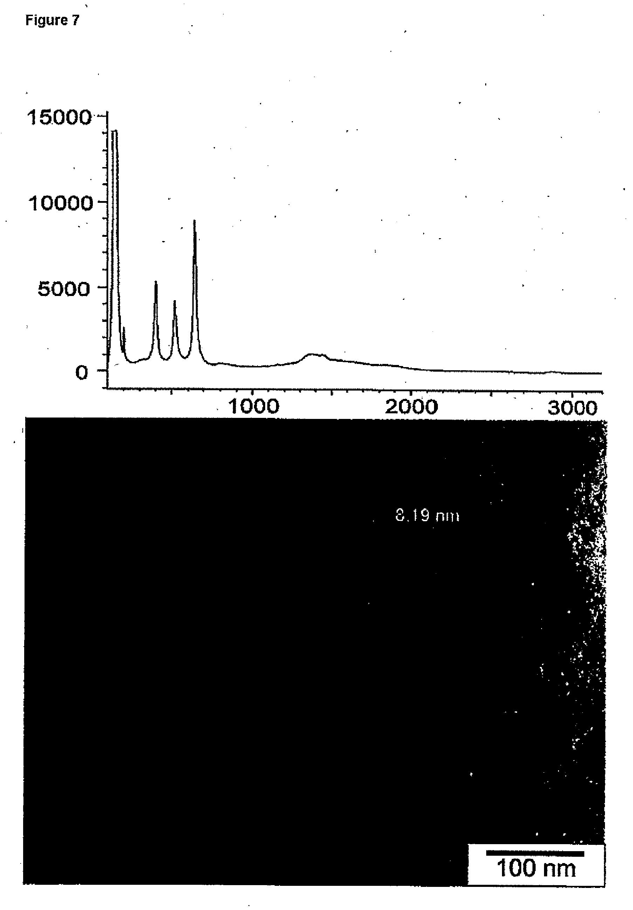

**Example 2.6.** According to the general procedure of Example 2, the titanium dioxide nanoparticles were precipitated from the dispersion of titanium dioxide in trihexyl(tetradecyl)phosphonium chloride. Different micrographs of the as-precipitated nanoparticles were collected from a transmission electron microscope, with varying degrees of magnification. Spherical nanoparticles are observed, not in clusters and with a uniform size distribution. The computer application of the microscope measured the size of the nanoparticles in the micrographs, indicating a nanoparticle size between 2 and 10 nm (Figure 7). The X-ray diffraction confirmed the tetragonal structure of the precipitated nanoparticles.

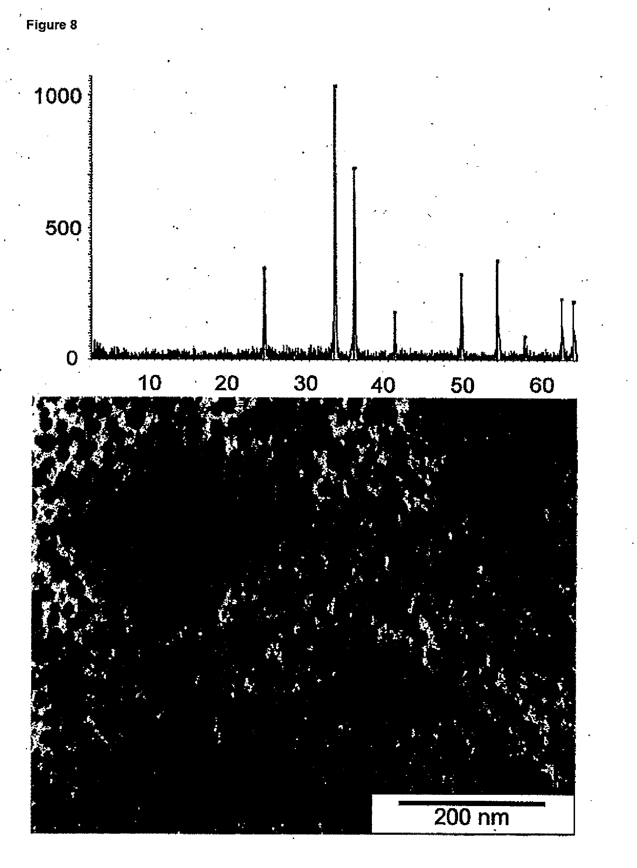

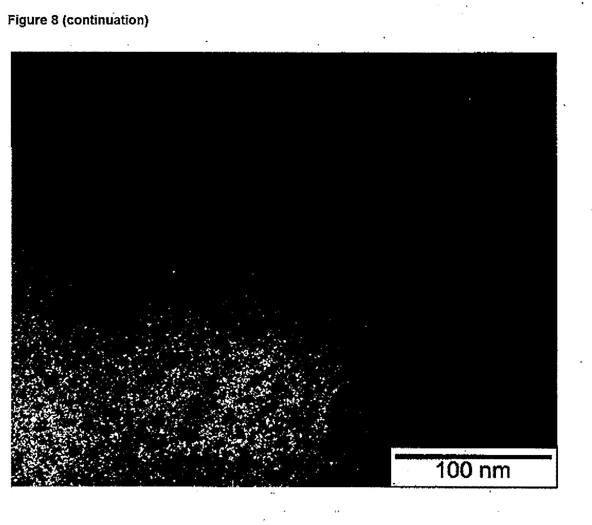

**Example 2.7.** According to the general procedure of Example 2, the iron (III) oxide nanoparticles were precipitated from the iron oxide dispersion in trihexyl(tetradecyl)phosphonium chloride. The presented micrographs of the precipitated nanoparticles (Figure 8) were performed in a transmission electron microscope, with varying degrees of magnification. The nanoparticles are spherical, have no agglomeration phenomena and have a uniform size distribution. In the micrographs it was also measured the size of the nanoparticles aided by the computer application of the microscope, obtaining a nanoparticle size between 10 and 25 nm (Figure 8). The X-ray diffraction confirmed the rhombohedral structure of the iron (III) oxide nanoparticles, as shown in Figure 8.

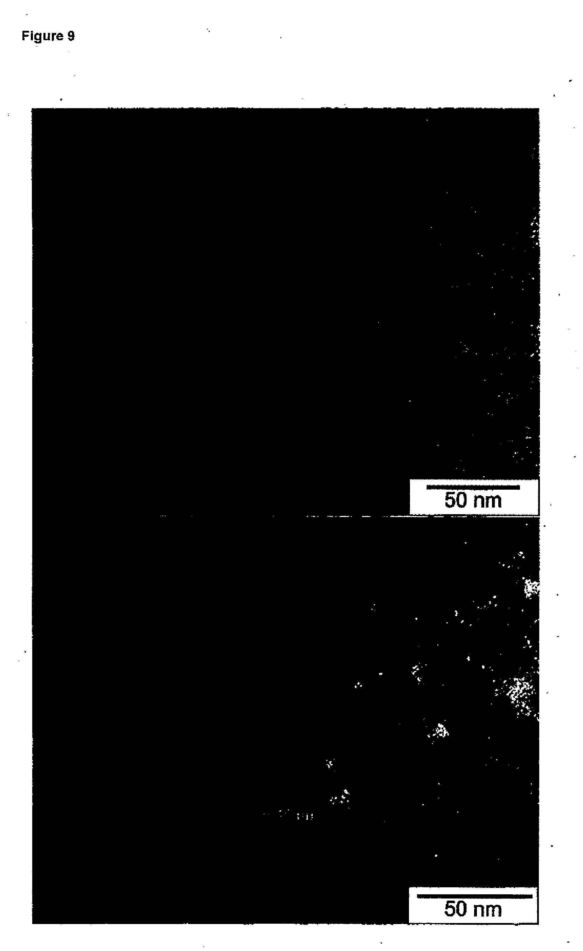

**Example 2.8.** According to the general procedure of Example 2, the titanium dioxide nanoparticles were precipitated from the titanium dioxide dispersion in 1-hexyl-3,5-dimethylpyridinium bis(trifluoromethylsulfonyl)imide. Several micrographs of the precipitated nanoparticles were recorded (Figure 9) in a transmission electron microscope, with different degrees of magnification. Spherical nanoparticles are observed, not in clusters and with a uniform size distribution. The nanoparticle size is between 3 and 6 nm, value obtained from the micrographs using the computer application of the microscope.

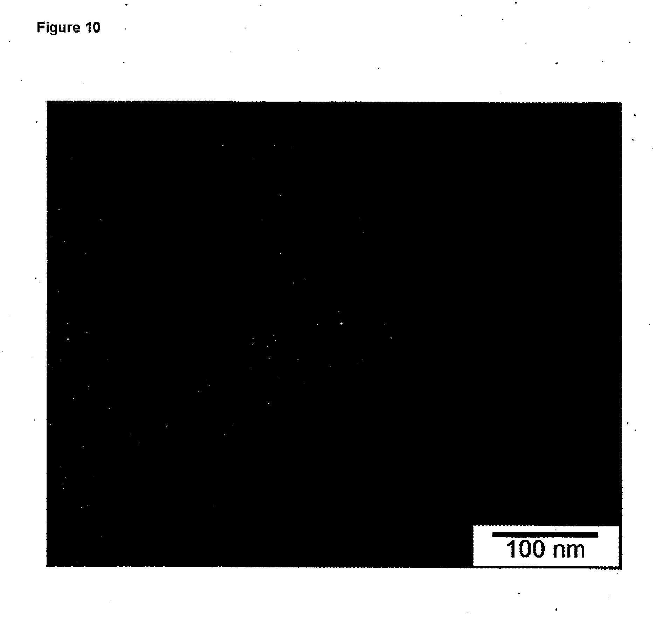

**Example 2.9.** According to the general procedure of Example 2, the titanium dioxide nanoparticles were precipitated from the titanium dioxide dispersion in 1-octyl-3-methylimidazolium bis(trifluoromethylsulfonyl)imide. Figure 10 shows a micrograph of the precipitated nanoparticles which was performed in a transmission electron microscope, with varying degrees of magnification. The nanoparticles are spherical, they do not present agglomeration phenomena and have a uniform size distribution. In the micrographs, the size of the nanoparticles was measured thanks to the computer application of the microscope, obtaining a nanoparticle size between 3 and 15 nm (Figure 10).

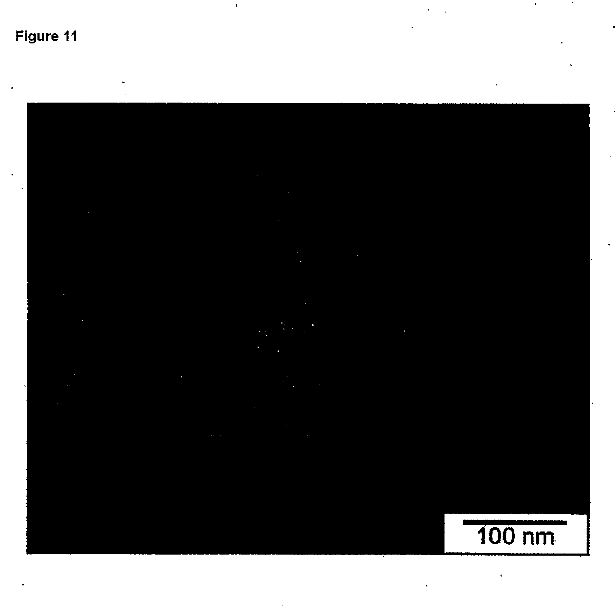

**Example 2.10.** According to the general procedure of Example 2, the silver iodide nanoparticles were precipitated from the silver iodide dispersion in trihexyl(tetradecyl)phosphonium chloride. Figure 11 shows a micrograph of the precipitated nanoparticles which was performed in a transmission electron microscope, with varying degrees of magnification. The nanoparticles are spherical, they do not present agglomeration phenomena and have a uniform size distribution. In the micrographs, the size of the nanoparticles was measured thanks to the computer application of the microscope, obtaining a nanoparticle size between 2 and 10 nm (Figure 11).

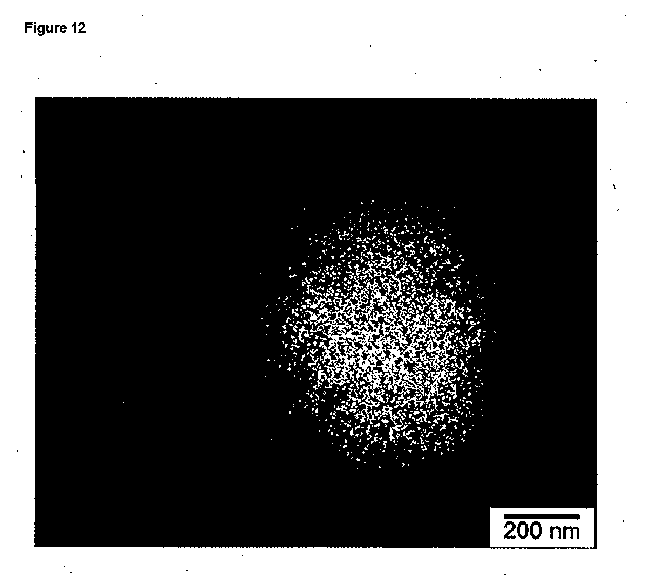

**Example 2.11.** According to the general procedure of Example 2, the cadmium sulfide nanoparticles were precipitated from the cadmium sulfide dispersion in trihexyl(tetradecyl)phosphonium bis(trifluoromethylsulfonyl)imide. Figure 12 shows a micrograph of the precipitated nanoparticles which was performed in a transmission electron microscope, with varying degrees of magnification. The nanoparticles are spherical, they do not present agglomeration phenomena and have a uniform size distribution. In the micrographs, the size of the nanoparticles was measured thanks to the computer application of the microscope, obtaining a nanoparticle size between 2 and 10 nm (Figure 11).

## Claims

1. Method for the preparation of a dispersion of nanoparticles in ionic liquids comprising
a) contacting a solid precursor with an ionic liquid,
b) stirring the mixture between 50 and 150° C,
c) centrifugation and decantation.

2. Method according claim 1, which further comprises an additional step d), following step c), comprising the precipitation of the nanoparticles.

3. Method according claim 2, wherein the precipitation step d), comprises
i) adding a capping agent,
ii) adding a solvent,
iii) centrifugation and decantation.

4. Method according to any of previous claims, wherein the solid precursor in the step a) is selected from the group consisting of metals, metal oxides, metal sulfides and metal selenides.

5. Method according to claim 4, wherein metal components in the step a) are selected from transition metals.

6. Method according to any of previous claims, wherein the ionic liquid in the step a) is **characterized by** having a melting point same or below 150 °C.

7. Method according to any of previous claims, wherein in the step b) the mixture is stirred between 700 and 1300 rpm.

8. Method according to any of previous claims, wherein in the step c) the mixture is centrifuged between 3500 and 4500 rpm.

9. Method according to any of claims 3 to 9, wherein in the step i) the capping agent is a compound which is bearing a thiol group.

10. Method according to any of claims 3 to 10, wherein the solvent added in step ii) is selected from an alkyl alcohol and a dialkyl ketone.

11. Method according to any of claims 3 to 11, wherein in the step iii) the mixture is centrifuged between 4000 and 5000 rpm.

12. Dispersion of nanoparticles in an ionic liquid obtainable by the method described in claim 1.
